# EUROPEAN PATENT APPLICATION

(11) **EP 4 684 619 A1**
(43) Date of publication of application: **28.01.2026**
(21) Application number: 25174965.1
(22) Date of filing: 08.05.2025
(51) Int. Cl.: A01B 69/04

(54) **ROUTE PLANNING FOR AN AGRICULTURAL VEHICLE**

(30) Priority: 26.07.2024 GB 202411007
(71) Applicant: AGCO International GmbH, 8212 Neuhausen am Rheinfall (CH)
(72) Inventor: LAUSDAHL, Kenneth, DK8900 Randers (DK); BECH, Søren, DK8900 Randers (DK); ZHOU, Kun, 8930 Randers (DK); NILSSON, Rene, DK8900 Randers (DK)
(74) Representative: AGCO Intellectual Property Department

(57) **Abstract**

A guidance control system for generating a recommended route for an agricultural vehicle in advance of performing an agricultural process. The guidance control system further tracks adherence of the agricultural vehicle to the recommended route and/or controlling the vehicle to follow the recommended route. The recommended route is generated responsive to the identification and classification(s) of one or more obstacles within a predetermined region in which the agricultural process is to be performed.

## Description

### FIELD

Embodiments of the present disclosure relate to agricultural vehicles, and in particular to route planning for agricultural vehicles.

### BACKGROUND

With ever-increasing population numbers and ongoing interest in more environmentally friendly farming practices, there is a desire to improve the efficiency of performing agricultural processes. Examples of agricultural processes include ploughing, planting, spraying, fertilizing, harvesting and so on. Each of these activities plays a distinct role in the overall agricultural production cycle and their efficiency directly impacts the productivity and sustainability of farming operations.

One of the identified areas for improving agricultural efficiency is the route or path taken by an agricultural vehicle during the performance of these processes. Several factors are considered when planning a route for an agricultural vehicle, such as minimizing fuel consumption, decreasing soil compression, and expanding the area available for crop cultivation, e.g., by reducing the number of vehicle tracks in the treated region, all while avoiding obstacles.

Typically, route planning techniques make use of a known boundary of a region to undergo the agricultural process (e.g., a field). The objective of the generated route is to define a path by which the vehicle can perform the agricultural process over the entirety of this region in the most efficient manner possible, e.g., taking the above considerations into account, while avoiding obstacles.

There is an ongoing demand to improve the planning and tracking of recommended routes for agricultural vehicles.

### BRIEF SUMMARY

According to examples in accordance with this disclosure, there is provided a computer-implemented method for generating a recommended route for an agricultural vehicle to perform an agricultural process within a predetermined region bound by a boundary.

The computer-implemented method comprises: obtaining, by a guidance control system, boundary information, boundary information defining the predetermined region; obtaining, by the guidance control system, geospatial information describing physical characteristics of the predetermined region; identifying and classifying, by the guidance control system, an obstacle in the predetermined region by processing the geospatial information; generating a recommended route for movement of the agricultural vehicle within the predetermined region by processing at least the boundary information and the identified and classified obstacle; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

*The present disclosure thereby provides a mechanism for determining a recommended route for an agricultural vehicle in advance of performing an agricultural procedure or process (e.g., a spraying procedure, ploughing procedure, planting procedure and so on). The recommended route is generated based on the boundary of a predetermined region as well as identifying and classifying obstacles within the region by processing geospatial information. In this way, obstacles cannot only be merely identified but also classified, such that route planning is able to treat different classes of obstacles differently. For example, for an agricultural vehicle with a boom, a low obstacle could be treated differently to a tall obstacle during route planning, thus allowing for more efficient route planning than merely treating all obstacles the same. In other words, embodiments of the present disclosure facilitate improved fidelity of an initial recommended route versus the executed field operation in reality.*

*The present disclosure also proposes to track the adherence of the agricultural vehicle to the recommended route when performing the agricultural process. The route is updated responsive to a deviation of the agricultural vehicle from the recommended route, to thereby provide an adaptive approach that directly responds to a physical operation or position of the agricultural vehicle.*

In some examples, classifying an obstacle may comprise classifying the obstacle into one of a plurality of obstacle classes; and wherein generating the recommended route is responsive to the obstacle class of the obstacle. *This approach advantageously recognizes that for a region including one or more obstacles, the recommended route can change depending on the obstacle class of the obstacle(s). This is because different classes of obstacles can be treated differently during route planning, for instance, one class of obstacle may require a wider berth of avoidance than another class of obstacle.*

In some examples, the plurality of obstacle classes may comprise at least two of: a utility pole; a wind turbine; a tree; a building; a road; a ditch; a fence; a stream; a drain cover; a body of water; crops; a forest; a negative height obstacle; a flat obstacle; a short obstacle; and a tall obstacle. *These are all particularly advantageous obstacle classes to classify obstacles in, as routes through a region including one or more of these obstacles can vary widely depending on which of these obstacles are included. For instance, an agricultural vehicle with a boom may be able to have the boom overhang a low obstacle or a fence, but it would not be able to overhang a building or a tree, and so would need a route that avoids these obstacles entirely.*

In some examples, the plurality of obstacle classes may comprise: a negative height obstacle; a flat obstacle; a short obstacle; and a tall obstacle. *These particular obstacle classes are particularly useful as the height of the obstacle is one of the most important aspects for route planning, especially for agricultural vehicles with booms, for example.*

In some examples, the method may further comprise obtaining, by the guidance control system, vehicle information, wherein: the vehicle information identifies a category of the agricultural vehicle; and wherein generating the recommended route is responsive to the category of the agricultural vehicle in combination with the obstacle class of the obstacle. *In this way, the type of agricultural vehicle (and thus how they interact with different classes of obstacles, as not all agricultural vehicles will have the same requirements, dimensions, driving capabilities, etc.) can also be taken into account, facilitating even more efficient route planning.*

In some examples, the geospatial information may comprise at least one of: optical satellite imagery of the predetermined region; near infrared satellite imagery of the predetermined region; a structure map of the predetermined region; and shuttle radar topography mission data of the predetermined region. *These are all effective sources of physical characteristics of a region, allowing efficient and reliable identification and classification of obstacles.*

In some examples, processing the geospatial information may comprise performing feature analysis of the geospatial information. *Feature analysis provides an effective and efficient way to identify and classify obstacles from geospatial information.*

In some examples, the geospatial information may comprise at least two different types of geospatial information. *Using at least two types of geospatial information increases the reliability of both identifying and classifying obstacles.*

In some examples, the act of processing the geospatial information to identify and classify the obstacle may comprise processing the geospatial information using one or more machine-learning algorithms. *This provides high quality and reliable identification and classification of the obstacle(s) within the predetermined region.*

In some examples, the method may further comprise controlling an output user interface to provide a visual representation of the recommended route. *This provides an operator of the agricultural vehicle with information on the recommended route. It will be appreciated that, if the recommended route is updated during the agricultural process, then the visual representation of the recommended route may be updated accordingly. This provides a human-machine interface that aids a human to perform a more effective agricultural process within the predetermined region.*

In some examples, the position monitoring device is configured to define a position of the agricultural vehicle within a predefined co-ordinate system; and the recommended route defines a recommended path for the agricultural vehicle within the predefined co-ordinate system. *This provides a reliable system for defining and monitoring adherence to the recommended route.*

In some examples, the recommended route may comprise one or more location markers each identifying a point of the recommended route with respect to the predetermined co-ordinate system. *This provides a reliable and resource-efficient mechanism for storing data that identifies the recommended route.*

In some examples, the act of obtaining the boundary information comprises retrieving the boundary information from a database storing a plurality of instances of boundary information for different predetermined regions. *Thus, it is not necessary that the guidance control system perform the generation of the boundary information, rather the boundary information may be extracted from a database. Thus, the boundary information may be predefined or precalculated, in order to improve a speed and*/*or efficiency of generating the recommended route.*

In some examples, obtaining the boundary information may comprise generating the boundary information by processing satellite imagery of the predetermined region. *This may allow boundary information to still be obtained even in situations where it is not retrievable from a database.*

In some examples, controlling the output user interface comprises providing a visual representation of the predetermined region; and overlaying a visual representation of the recommended route, over the visual representation of the predetermined region, in the form of one or more lines representing the recommended route. *This provides an intuitive visual representation of the recommended route for increasing a likelihood of an individual adhering to the recommended route.*

There is also provided a method for moving an agricultural vehicle within a predetermined region bound by a boundary, the method comprising: generating a recommended route for the agricultural vehicle by: obtaining, by a guidance control system, boundary information defining the predetermined region; obtaining, by the guidance control system, geospatial information describing physical characteristics of the predetermined region; identifying and classifying, by the guidance control system, an obstacle in the predetermined region by processing the geospatial information; generating a recommended route for movement of the agricultural vehicle within the predetermined region by processing at least the boundary information and the identified and classified obstacle; and during a subsequent performance of the agricultural process by the agricultural vehicle within the region, controlling the travel direction of the agricultural vehicle to follow the recommended route for the agricultural vehicle.

In some examples, the act of controlling the direction of the agricultural vehicle is performed automatically. Alternatively, the act of controlling the direction of the agricultural vehicle may be performed by an operator or user of the agricultural vehicle, i.e., controlled manually.

The method may further comprise restricting or preventing the performance of an agricultural process by the agricultural vehicle until after the recommended route is available.

There is also provided an agricultural vehicle, comprising: a guidance control system configured to control one or more operations of the agricultural vehicle and comprising: at least one processor; and at least one non-transitory computer-readable storage medium storing instructions thereon that, when executed by the at least one processor, cause the guidance control system to: obtain boundary information defining the predetermined region; obtain geospatial information describing physical characteristics of the predetermined region; identify and classify an obstacle in the predetermined region by processing the geospatial information; generate a recommended route for movement of the agricultural vehicle within the predetermined region by processing at least the boundary information and the identified and classified obstacle; and during a subsequent performance of the agricultural process by the agricultural vehicle within the predetermined region: monitor, using a position monitoring device, the position of the agricultural vehicle with respect to the recommended route; and responsive to a deviation of the monitored position of the agricultural vehicle from the recommended route, updating, by the guidance control system, the recommended route. The position monitoring device may be part of the guidance control system, or it may be separate but (wirelessly/wiredly) connected to the guidance control system (and thus the instructions would cause the position monitoring device to monitor the position of the agricultural vehicle).

The guidance control system may be adapted to perform the acts of any herein proposed method, and vice versa.

In some examples, the agricultural vehicle further comprises an output user interface and wherein at least one non-transitory computer-readable storage medium of the guidance control system further comprises instructions that, when executed by the at least one processor, cause the guidance control system guidance control system to provide, on the output user interface, a visual representation of the recommended route.

There is also provided an agricultural vehicle comprising a guidance control system configured to control one or more operations of the agricultural vehicle and comprising: at least one processor; and at least one non-transitory computer-readable storage medium storing instructions thereon that, when executed by the at least one processor, cause the guidance control system to: obtain boundary information defining the predetermined region; obtain geospatial information describing physical characteristics of the predetermined region; identify and classify an obstacle in the predetermined region by processing the geospatial information; generate a recommended route for movement of the agricultural vehicle within the predetermined region by processing at least the boundary information and the identified and classified obstacle; and during a subsequent performance of the agricultural process by the agricultural vehicle within the region, control the travel direction of the agricultural vehicle to follow the recommended route for the agricultural vehicle.

### BRIEF DESCRIPTION OF THE DRAWINGS

One or more embodiments of the disclosure will now be described, by way of example only, with reference to the accompanying drawings, in which:
FIG. 1 illustrates a view of a predetermined region with a boundary;
FIG. 2 is a flowchart illustrating a proposed method;
FIG. 3 illustrates a view of the predetermined region with a representation of a recommended route; and
FIG. 4 illustrates a system comprising a guidance control system as herein proposed.

### DETAILED DESCRIPTION

Embodiments of the disclosure will be described with reference to the Figures.

It should be understood that the detailed description and specific examples, while indicating exemplary embodiments of the apparatus, systems and methods, are intended for purposes of illustration only and are not intended to limit the scope of the present disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for generating a recommended route for an agricultural vehicle in advance of performing an agricultural process. The mechanism further includes tracking adherence of the agricultural vehicle to the recommended route and/or controlling the vehicle to follow the recommended route. The recommended route is generated responsive to the classification(s) of one or more identified obstacles and boundary information.

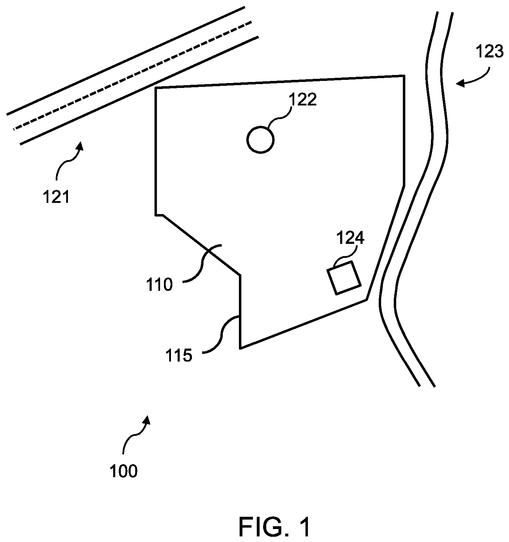

FIG. 1 illustrates a view of an agricultural environment 100 in which proposed embodiments may be implemented, for the purposes of improved contextual understanding. Within the environment 100, a predetermined region 110 is bound or delineated by a boundary 115. The predetermined region may, for instance, represent a field of a farm.

In any agricultural environment, there may be one or more obstacles (otherwise referred to as hazards or objects) in the predetermined region 110. In this example, a road 121 approaches an edge of the predetermined region but is not within it, and a waterway 123 runs alongside another section of the boundary, but, again, is not within the predetermined region. In the predetermined region, however, are two obstacles, 122 and 124. In this example, obstacle 122 comprises a short obstacle, such as a small section of wall or fence, and obstacle 124 comprises a tall obstacle, such as a building or tree.

The present disclosure recognizes that it would be desirable if the route taken by an agricultural vehicle (when performing an agricultural process or procedure within the predetermined region) takes account of the obstacles (and the nature, e.g., classification, of said obstacles) within the predetermined region.

The present disclosure proposes to plan a recommended route for the agricultural vehicle using classifications of identified obstacle(s) in the predetermined region in the planning of the recommended route.

By way of example only, the recommended route may be selected so as to permit a different proximity and/or action of the agricultural vehicle dependent upon the classification of the one or more obstacles to which the recommended route approaches. More detailed examples are later provided.

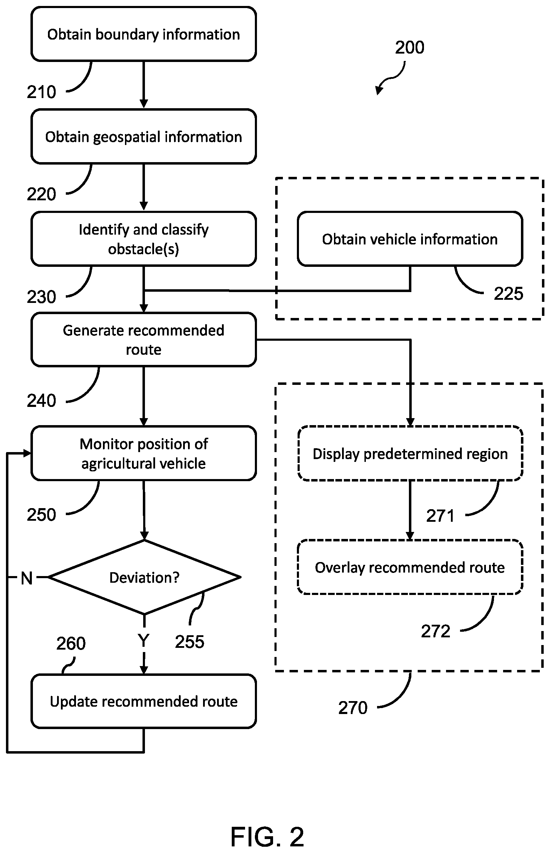

FIG. 2 is a flowchart illustrating a proposed computer-implemented method 200 that is executed, e.g., by a processing system, to perform the proposed approach. In particular, the method 200 is designed for generating a recommended route for an agricultural vehicle to perform an agricultural process within a predetermined region bound by a boundary.

The computer-implemented method 200 comprises an act 210 of obtaining, by a guidance control system, boundary information. The boundary information defines the predetermined region, e.g., comprises information indicating the boundary of the predetermined region.

The boundary information can, for instance, be retrieved from a memory or database. More particularly, in some embodiments, the act of obtaining the boundary information can comprise retrieving the boundary information from a database storing a plurality of instances of boundary information for different predetermined regions. In this approach, the boundary information corresponding to the predetermined region is selected. Thus, it is not necessary that the guidance control system perform the generation of the boundary information, rather the boundary information may be extracted from a database. Thus, the boundary information may be predefined or precalculated, in order to improve a speed and/or efficiency of generating the recommended route.

Alternatively, the boundary information can be generated by the guidance control system by processing satellite imagery of the predetermined region. This can thus allow boundary information to still be obtained even in situations where it is not retrievable from a database.

The computer-implemented method 200 also comprises an act 220 of obtaining, by the guidance control system, geospatial information describing physical characteristics of the predetermined region. For instance, the geospatial information can be understood as describing the physical geography, topography, land use, infrastructure, hydrology and/or vegetation of the predetermined region. All these are relevant physical characteristics of the predetermined region for obstacle identification and classification.

For example, in this embodiment, the geospatial information comprises at least one of: optical satellite imagery of the predetermined region; near infrared satellite imagery of the predetermined region; a structure map of the predetermined region; and shuttle radar topography mission data of the predetermined region. These are all effective sources of physical characteristics of a region, allowing efficient and reliable identification and classification of obstacles. In other embodiments, however, the geospatial information can comprise any suitable type of geospatial information from which obstacles can be identified and classified. Furthermore, in this embodiment, the geospatial information specifically comprises at least two different types of geospatial information. Using at least two types of geospatial information increases the reliability of both identifying and classifying obstacles. In other embodiments, however, the geospatial information can comprise just one type of geospatial information.

The computer-implemented method 200 also comprises an act 230 of identifying and classifying, by the guidance control system, an obstacle in the predetermined region by processing the geospatial information. In other words, act 230 can be understood as analyzing the geospatial information to identify and classify one or more obstacles in the predetermined region.

For instance, in this embodiment, classifying the obstacle comprises classifying the obstacle into one of a plurality of obstacle classes; and wherein generating the recommended route is responsive to the obstacle class of the obstacle. This approach advantageously recognizes that for a region including one or more obstacles, the recommended route can change depending on the obstacle class of the obstacle(s). This is because different classes of obstacles can be treated differently during route planning, for instance, one class of obstacle may require a wider berth of avoidance than another class of obstacle. However, in other embodiments, any other suitable method of classifying obstacles can be used, as would be understood by the skilled person.

For instance, in some embodiments, the plurality of obstacle classes can comprise at least two of: a utility pole; a wind turbine; a tree; a building; a road; a ditch; a fence; a stream; a drain cover; a body of water; crops; a forest; a negative height obstacle; a flat obstacle; a short obstacle; and a tall obstacle. These are all particularly advantageous obstacle classes to classify obstacles in, as routes through a region including one or more of these obstacles can vary widely depending on which of these obstacles are included. For instance, for an agricultural vehicle with a boom, the boom may be able to overhang a low obstacle or a fence, but it would not be able to overhang a building or a tree, and so a route would be needed that avoids these obstacles entirely. As would be understood by the skilled person, in other embodiments, the plurality of obstacle classes can comprise at least two of any suitable obstacle classifications.

In this embodiment, however, the plurality of obstacle classes actually comprises: a negative height obstacle; a flat (e.g., substantially level) obstacle; a short obstacle; and a tall obstacle. These particular obstacle classes are particularly useful as the height of the obstacle is one of the most important aspects for route planning, especially for agricultural vehicles with booms, for example. For instance, in some situations it may not be important what the obstacle actually is, but just the height (verticality) of said obstacle. The method can thus be made more efficient by only classifying the obstacle(s) by their height rather than their exact nature.

In this embodiment, processing the geospatial information comprises performing feature analysis of the geospatial information. Feature analysis provides an effective and efficient way to identify and classify obstacles from geospatial information. Feature analysis is particularly effective when used on a structure map of the predetermined region. It should be noted, however, that in other embodiments, the geospatial information can be processed in any suitable way and need not include performing feature analysis.

In some embodiments, the act of processing the geospatial information to identify and classify the obstacle can comprise processing the geospatial information using one or more machine-learning algorithms. This provides high quality and reliable identification and classification of the obstacle(s) within the predetermined region, however, in other embodiments, any suitable algorithm can be used to process the geospatial information.

For instance, one or more machine-learning algorithms may be appropriately configured and/or trained for identifying and classifying obstacles by processing geospatial information. Any suitable machine-learning algorithm may be used in different embodiments for the present disclosure. Suitable machine-learning algorithms include (artificial) neural networks, support vector machines (SVMs), Naïve Bayesian models and decision tree algorithms, although other appropriate examples will be apparent to the skilled person.

There are a number of well-established approaches for training a machine-learning algorithm. One widely used learning approach is known as a supervised learning approach, which makes use of a large database of known input and output data. In such techniques, the machine-learning algorithm is modified until an error between predicted output data, obtained by processing the input data with the machine-learning algorithm, and the actual (known) output data is close to zero, i.e., until the predicted output data and the known output data converge. The value of this error is often defined by a cost function, which can be selected or defined by an appropriately skilled individual. The precise mechanism for modifying the machine-learning algorithm depends upon the type of model. Example approaches for use with a neural network include gradient descent, backpropagation algorithms and so on.

It is not essential that the machine learning algorithm(s) be trained by the guidance control system. Rather, the machine-learning algorithm(s) may be trained in advance of their usage (i.e., exploitation for performing inference) by the guidance control system. More specifically, the machine-learning algorithm(s) may be trained by a dedicated training processing system, such as a cloud-based processing system.

The computer-implemented method 200 also comprises an act 240 of generating (by the guidance control system) a recommended route for movement of the agricultural vehicle within the predetermined region by processing at least the boundary information and the identified and classified obstacle.

The recommended route may be defined with respect to a predetermined spatial co-ordinate system, such as a global or geographic co-ordinate system (e.g., longitude and latitude), a region/local co-ordinate system (e.g., a trilatered/triangulated position) or a relative co-ordinate system, such as one defined with respect to the boundary of the predetermined region.

In general, act 240 may comprise generating a recommended route with a target or aim of performing an agricultural process across the largest possible area of the predetermined region.

Optionally, the computer-implemented method 200 can also comprise act 225 of obtaining, by the guidance control system, vehicle information, the vehicle information identifying a category of agricultural vehicle. For instance, example categories of agricultural vehicles are tractors, combines, harvesters, plows, seeders, planters, sprayers, balers, spreaders, cultivators, mowers, loaders, telehandlers, grain carts, wagons, utility vehicles, irrigation machines, agricultural vehicles with a boom, agricultural vehicles without a boom and/or any other suitable category. Act 240 of generating the recommended route may thus be responsive to the category of the agricultural vehicle in combination with the obstacle class of the obstacle. In this way, the type of agricultural vehicle (and thus how they interact with different classes of obstacles, as not all agricultural vehicles will have the same requirements, dimensions, driving capabilities, etc.) can also be taken into account, facilitating even more efficient route planning. For example, the recommended route for a vehicle with a boom when the obstacle is a power line, or a short wall might be different than for a vehicle without a boom. However, the route for any category of vehicle might be the same when the obstacle is a deep pool of water. Essentially, this optional act may thus allow for a vehicle category / obstacle class matrix with different rules for route planning, e.g., whether to avoid, to continue but lower boom, to slow down, etc.

In an example, act 240 may comprise mapping an obstacle class with a corresponding predetermined permissible distance (the same for all categories of agricultural vehicle or having different permissible distances for different vehicle categories), e.g., defined in a look-up table or the like. The predetermined permissible distance(s) are defined in advance, e.g., by a user or default setting. Act 240 may thus comprise generating the recommended route by processing at least each defined permissible proximity such that, for each identified and classified obstacle, the recommended route avoids being more proximate to said obstacle than the predefined permissible proximity for said segment.

In other words, in some proposed approaches, the recommended route is generated with a condition that the recommended route is not permitted to be closer to any obstacle than the permissible proximity. This approach thus recognizes that different classifications of obstacles would benefit from different minimum distances for an agricultural vehicle, e.g., to avoid or reduce a risk of damage to the agricultural vehicle and/or the obstacle. By way of a simple example, where an obstacle is classified as a waterway (e.g., river), then it may be preferable to have a relatively large minimum distance for the agricultural vehicle, e.g., to reduce the risk of the agricultural vehicle moving over soft ground (and potentially getting stuck and/or damaged) and/or to reduce a risk of damaging the river (e.g., by spraying fertilizer into the river.

As another example, where an obstacle is classified as a tree, then it may be preferable to have a medium/average/standard minimum distance for the agricultural vehicle, e.g., to avoid a risk of a branch or limb of the tree damaging the agricultural vehicle and/or to reduce a risk of ground compaction near the tree, which may damage it. As yet another example, if an obstacle is classified as a utility pole, then it may be preferable to have a relatively small minimum distance for the agricultural vehicle, e.g., to maximize or increase the size of the available area for undergoing the agricultural process as there is not much danger to closely approaching a utility pole.

The computer-implemented method 200 also comprises performing further acts 250 and 260, which are only performed during a subsequent (to act 240) performance of the agricultural process.

Act 250 comprises monitoring, using a position monitoring device, the position of the agricultural vehicle with respect to the recommended route. Act 250 may be performed by the guidance control system communicating or otherwise interacting with the position monitoring device to monitor the position of the agricultural vehicle.

Approaches for monitoring or tracking the position of an agricultural vehicle are widely known in the art, and typically track a positioning element of the agricultural vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system.

The monitored/tracked position of the agricultural vehicle may be defined in the same spatial co-ordinate system as the recommended route. Where appropriate or required, this may comprise perform a spatial transformation of the monitored/tracked position and/or the recommended route so that both sets of data lie in a same spatial co-ordinate system, i.e., share a same spatial co-ordinate system. Approaches for performing such as technique are well known in the art, particularly as the relationship between different spatial co-ordinate systems can be readily defined.

Put another way, the position monitoring device may be configured to define a position of the agricultural vehicle within a predefined co-ordinate system. The recommended route defines a recommended path for the agricultural vehicle within the predefined co-ordinate system.

Act 260 comprises, responsive to a deviation of the monitored position of the agricultural vehicle from the recommended route, updating, by the guidance control system, the recommended route.

Thus, act 260 may comprise a sub-act 255 of determining whether or not that there is a deviation from the monitored position of the agricultural vehicle from the recommended route. Sub-act 255 may be performed by the guidance control system and/or the position monitoring system.

One approach to performing act 255 is to determine a shortest distance (e.g., in the shared spatial co-ordinate system) between the monitored position and the recommended route. Responsive to the determined distance breaching/exceeding a predetermined threshold (e.g., representing a spatial distance of no less than 1 m), then act 255 may determine that there is a deviation from the recommended route. Responsive to the determined distance failing to breach/exceed a predetermined threshold (e.g., representing a spatial distance of no less than 1 m), then act 255 may determine that there is no deviation from the recommended route.

Responsive to a positive determination in sub-act 255 (i.e., when a deviation is detected), the method 200 moves to the act 260 of updating the recommended route. Act 260 may be performed, for instance, by effectively repeating the procedure performed in act 240 - but with a modified version of the boundary of the predetermined region. In particular, the boundary may be moved such that the predetermined region no longer contains any part of the region that has undergone the agricultural procedure.

In some examples, the recommended route comprises one or more location markers each identifying a point of the recommended route with respect to the predetermined co-ordinate system. This provides a mechanism for coherently and reliably defining the recommended route using a relatively small amount of data.

Optionally, the method 200 further comprises an act 270 of controlling an output user interface to provide a visual representation of the recommended route. Approaches for controlling an output user interface (e.g., a display or screen) to provide a visual representation of a data element will be readily apparent to the skilled person.

As a working example, act 270 may comprise a sub-act 271 of controlling the output user interface to provide a visual representation of the predetermined region. This may be performed, for example, by using the boundary information to define the shape of the predetermined region. As an alternative example, this may be performed by using an aerial photograph (e.g., a satellite image) of the predetermined region.

In this working example, act 270 may further comprise a sub-act 272 of overlaying a visual representation of the recommended route, over the visual representation of the predetermined region. The visual representation of the recommended route may take the form of one or more lines representing the recommended route.

Sub-act 272 can be trivially performed if the spatial relationship between the predetermined region and the recommended route is known, e.g., they are defined in a same spatial co-ordinate system. In particular, the global position of an area represented in an aerial photograph, such as a satellite image, is known or determinable when the aerial photograph is taken. If the recommended route can be defined using similar geographic position information, then a visual representation of the recommended route can be trivially overlaid upon the visual representation of the predetermined region.

Although not illustrated in FIG. 2, the method 200 may comprise, during the agricultural procedure, controlling (using a vehicle control device) a movement of the agricultural vehicle to follow the recommended route. This may be performed by monitoring the position of the agricultural vehicle (e.g., using any previously described approach) and controlling the steering of the agricultural vehicle such that the monitored position follows the recommended route. In some embodiments, the travel speed of the agricultural vehicle can also be controlled during performance of the agricultural process. For instance, the travel speed of the agricultural vehicle can be controlled to slow down when approaching a detected dangerous area (e.g., as described above, if the classification of an obstacle represents an increased risk of damage to the vehicle or the obstacle itself). In some embodiments, the act of controlling the direction (and potentially also travel speed) of the agricultural vehicle can be performed automatically.

Approaches for automated control of an agricultural vehicle to follow a recommended route are known in the art, e.g., as suggested by (inter alia) Pedersen, Søren Marcus, et al. "Agricultural robots-system analysis and economic feasibility." Precision agriculture 7 (2006): 295-308 or O'Connor, Michael, et al. "Automatic steering of farm vehicles using GPS." Proceedings of the Third International Conference on Precision Agriculture. Madison, WI, USA: American Society of Agronomy, Crop Science Society of America, Soil Science Society of America, 1996.

Alternatively, controlling the movement of the agricultural vehicle may be performed or controlled by a human operator of the agricultural vehicle, e.g., performing a manual control of the travel direction(s) (and speed) of the agricultural vehicle using any known vehicle control mechanism (e.g., a steering wheel or the like). In such approaches, the method 200 may thus comprise controlling an output user interface to provide a visual representation of the recommended route (example approaches for which have been previously described) and controlling, by the human operator, the travel direction of the agricultural vehicle responsive to the recommended route.

In other words, in simple terms, the present disclosure can be understood as proposing a four-act approach for generating waylines (a recommended route) for a given field (predetermined region): identifying the field(s) boundary(ies); identifying obstacles within the field; classifying those obstacles; and then generating waylines for the field. For example, considering the first act, satellite images together with map features could be used to detect where the field boundary for an area of interest is. Alternatively, the field boundary could already be known, e.g., stored in a database.

Considering the second act, various types of analysis can be used within each field boundary to rank different sub-polygons (e.g., objects) according to the following categories: level obstacle (i.e., flat); negative altitude obstacle (e.g., a ditch); low height obstacle (e.g., a fence); and high height obstacle (e.g., a tree or building). This analysis could comprise satellite image analysis which can group parts of a field into similar texture and color. Using machine-learning, certain weights towards specific types of obstacles can be provided, such as, among others: power pole; wind turbine; tree; house; road; ditch; fence; stream; drain cover; and water cistern. The analysis could also comprise near infrared satellite analysis which can group parts of a field into similar types of vegetation, i.e., it can find areas which are known to be a crop type, a forest, a body of water, etc. The analysis could also comprise structure map feature analysis which can identify obstacles and their boundaries within a field. As the data is structured, this type of analysis is also particularly helpful for classification (e.g., towards the types of obstacles specified above). The analysis could also comprise shuttle radar topography mission data analysis which can be used to classify the relative altitude of obstructed areas found by other types of analysis - this type of analysis is also particularly useful for larger flooded obstacles such as lakes.

Considering the third act, the output from each type of analysis used above (e.g., one or more) is merged, and thus obstacles can then be classified according to the information available. Of course, the more different types of analysis used, the more accurate the classifications are likely to be, and the more specific they can be. For instance, if only shuttle radar topography mission data analysis is used, then obstacles may only be classified into various height categories, however, if structure map analysis is also used, then obstacles of the same height category could be further differentiated, such as classifying two tall obstacles as specifically a tree and a power pole.

Considering the fourth act, using the identified and classified obstacles, it is thus possible to generate waylines (i.e., a recommended route) with a technique that considers different types of obstacles - the various ways this could be done would be apparent to the skilled person, and examples have been provided above. For example, knowing the relative altitudes of various obstacles can allow the waylines to be better fitted as, for instance, implements with booms can overhang short or flat obstacles while utilizing a section control feature if such is supported by the implement.

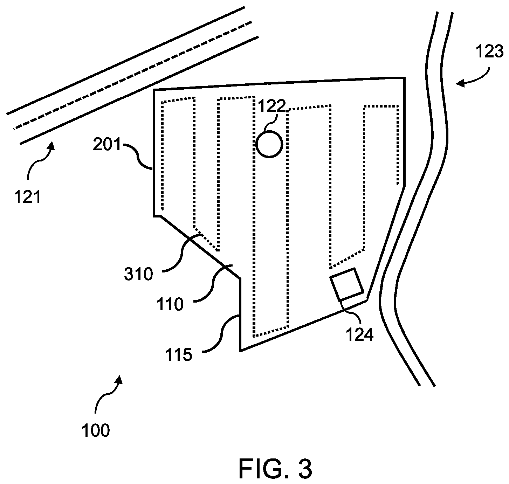

FIG. 3 provides a view of the environment 100 with a representation of the recommended route 310 positioned thereon. For instance, in this example, the agricultural vehicle is a vehicle with a boom, and it can be seen that the route passes close by the short obstacle 122 as the boom can overhang the short obstacle 122, however, the route entirely avoids the tall obstacle 124.

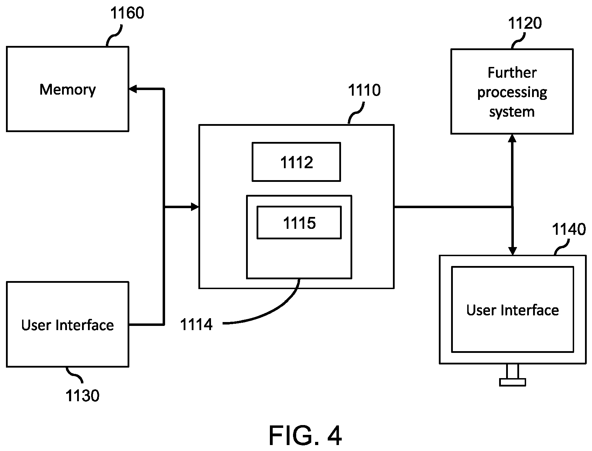

FIG. 4 illustrates an example of system 1100 in which embodiments may be employed.

The guidance control system comprises a guidance control system 1110, which is itself an embodiment of the present disclosure, a position monitoring device 1120, an (optional) input user interface 1130, and a (optional) output user interface 1140.

The guidance control system 1110 is configured to perform and/or co-ordinate the performance of any previously disclosed act that is identified as being performed by or using the guidance control system.

In particular examples, the guidance control system 1110 may perform the acts of: obtaining, by a guidance control system, boundary information, boundary information defining the predetermined region; obtaining, by the guidance control system, geospatial information describing physical characteristics of the predetermined region; identifying and classifying, by the guidance control system, an obstacle in the predetermined region by processing the geospatial information; generating a recommended route for movement of the agricultural vehicle within the predetermined region by processing at least the boundary information and the identified and classified obstacle; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

In some examples, the guidance control system 1110 may perform acts of: obtaining, by a guidance control system, boundary information defining the predetermined region; obtaining, by the guidance control system, geospatial information describing physical characteristics of the predetermined region; identifying and classifying, by the guidance control system, an obstacle in the predetermined region by processing the geospatial information; generating a recommended route for movement of the agricultural vehicle within the predetermined region by processing at least the boundary information and the identified and classified obstacle; and during a subsequent performance of the agricultural process by the agricultural vehicle within the region, controlling the travel direction of the agricultural vehicle to follow the recommended route for the agricultural vehicle.

More specifically, the guidance control system 1110 may comprise at least one processor 1112 and at least one non-transitory computer-readable storage medium 1114 storing instructions 1115 thereon that, when executed by the at least one processor, cause the guidance control system to perform any previously disclosed act that is identified as being performed by or using the guidance control system.

The skilled person would be readily capable of developing a guidance control system for carrying out any herein described method. Thus, each act of the flow chart may represent a different action performed by a guidance control system and may be performed by a respective module of the guidance control system.

The position monitoring device 1120 is configured to monitor the position of an agricultural vehicle during the performance of an agricultural process. Approaches for monitoring the position of a vehicle are well known in the art, some of which have been previously described in detail. The function or operation of the position monitoring system may be controlled by and/or responsive to instructions/communications from the guidance control system.

The guidance control system 1110 and the position monitoring device 1120 are configured to communicate with one another over any wired/wireless medium, e.g., an ethernet cable, using any suitable or known communication protocol.

The input user interface 1130 may be adapted to receive one or more inputs from a user or operator. The input(s) may, for instance, be used to define one or more properties or parameters used in one or more of the herein disclosed methods.

The output user interface 1140 may be adapted to provide a visual representation of the predetermined region and/or the recommended route. In particular, the guidance control system 1110 may communicate with the output user interface (e.g., embodiable as a screen or display) to provide such a visual representation.

The system 1100 may further comprise a memory 1160 configured to store one or more instances of boundary information. The guidance control system may be configured to obtain one of the one or more instances of boundary information from the memory 1160. More particularly, the memory or database may store a plurality of instances of boundary information for different predetermined regions. In this approach, the boundary information corresponding to the predetermined region is selected from the database, i.e., by selecting the boundary information corresponding to the relevant predetermined region.

There is also provided an agricultural vehicle comprising any herein disclosed guidance control system 1110 and (where appropriate) the position monitoring system.

It will be understood that disclosed methods are preferably computer-implemented methods. As such, there is also proposed the concept of a computer program comprising code means for implementing any described method when said program is run on a guidance control system, such as a computer. Thus, different portions, lines or blocks of code of a computer program according to an embodiment may be executed by a guidance control system or computer to perform any herein described method.

A computer program may be stored on a computer-readable medium, itself an embodiment of the present disclosure. A "computer-readable medium" is any suitable mechanism or format that can store a program for later processing by a guidance control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the present disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method for generating a recommended route for an agricultural vehicle to perform an agricultural process within a predetermined region bound by a boundary, the computer-implemented method comprising:
obtaining, by a guidance control system, boundary information defining the predetermined region;
obtaining, by the guidance control system, geospatial information describing physical characteristics of the predetermined region;
identifying and classifying, by the guidance control system, an obstacle in the predetermined region by processing the geospatial information;
generating a recommended route for movement of the agricultural vehicle within the predetermined region by processing at least the boundary information and the identified and classified obstacle; and
during a subsequent performance of the agricultural process by the agricultural vehicle within the region:
monitoring, using a position monitoring device, the position of the agricultural vehicle with respect to the recommended route; and
responsive to a deviation of the monitored position of the agricultural vehicle from the recommended route, updating, by the guidance control system, the recommended route.

2. The computer-implemented method of claim 1, wherein classifying an obstacle comprises classifying the obstacle into one of a plurality of obstacle classes; and wherein generating the recommended route is responsive to the obstacle class of the obstacle; optionally wherein the plurality of obstacle classes comprises at least two of: a utility pole; a wind turbine; a tree; a building; a road; a ditch; a fence; a stream; a drain cover; a body of water; crops; a forest; a negative height obstacle; a flat obstacle; a short obstacle; and a tall obstacle; or wherein the plurality of obstacle classes comprises: a negative height obstacle; a flat obstacle; a short obstacle; and a tall obstacle.

3. The computer-implemented method of any one of claims 1 to 2, further comprising obtaining, by the guidance control system, vehicle information, wherein:
the vehicle information identifies a category of the agricultural vehicle; and
wherein generating the recommended route is responsive to the category of the agricultural vehicle in combination with the obstacle class of the obstacle.

4. The computer-implemented method of any one of claims 1 to 3, wherein the geospatial information comprises at least one of: optical satellite imagery of the predetermined region; near infrared satellite imagery of the predetermined region; a structure map of the predetermined region; and shuttle radar topography mission data of the predetermined region.

5. The computer-implemented method of any one of claims 1 to 4, wherein processing the geospatial information comprises performing feature analysis of the geospatial information.

6. The computer-implemented method of any one of claims 1 to 5, wherein the geospatial information comprises at least two different types of geospatial information.

7. The computer-implemented method of any one of claims 1 to 6, wherein the act of processing the geospatial information to identify and classify the obstacle comprises processing the geospatial information using one or more machine-learning algorithms.

8. The computer-implemented method of any one of claims 1 to 7, further comprising controlling an output user interface to provide a visual representation of the recommended route.

9. The computer-implemented method of any one of claims 1 to 8, wherein:
the position monitoring device is configured to define a position of the agricultural vehicle within a predefined co-ordinate system; and
the recommended route defines a recommended path for the agricultural vehicle within the predefined co-ordinate system;
optionally wherein the recommended route comprises one or more location markers each identifying a point of the recommended route with respect to the predetermined co-ordinate system.

10. The computer-implemented method of any one of claims 1 to 9, wherein the act of obtaining the boundary information comprises:
retrieving the boundary information from a database storing a plurality of instances of boundary information for different predetermined regions; or
generating the boundary information by processing satellite imagery of the predetermined region.

11. A computer-implemented method for moving an agricultural vehicle within a predetermined region bound by a boundary, the method comprising:
generating a recommended route for the agricultural vehicle by:
obtaining, by a guidance control system, boundary information defining the predetermined region;
obtaining, by the guidance control system, geospatial information describing physical characteristics of the predetermined region;
identifying and classifying, by the guidance control system, an obstacle in the predetermined region by processing the geospatial information;
generating a recommended route for movement of the agricultural vehicle within the predetermined region by processing at least the boundary information and the identified and classified obstacle; and
during a subsequent performance of the agricultural process by the agricultural vehicle within the region, controlling the travel direction of the agricultural vehicle to follow the recommended route for the agricultural vehicle.

12. The computer-implemented method of claim 11, further comprising restricting or preventing the performance of an agricultural process by the agricultural vehicle until after the recommended route is available.

13. An agricultural vehicle, comprising:
a guidance control system configured to control one or more operations of the agricultural vehicle and comprising:
at least one processor; and
at least one non-transitory computer-readable storage medium storing instructions thereon that, when executed by the at least one processor, cause the guidance control system to:
obtain boundary information defining the predetermined region;
obtain geospatial information describing physical characteristics of the predetermined region;
identify and classify an obstacle in the predetermined region by processing the geospatial information;
generate a recommended route for movement of the agricultural vehicle within the predetermined region by processing at least the boundary information and the identified and classified obstacle; and
during a subsequent performance of the agricultural process by the agricultural vehicle within the region:
monitor, using a position monitoring device, the position of the agricultural vehicle with respect to the recommended route; and
responsive to a deviation of the monitored position of the agricultural vehicle from the recommended route, update, by the guidance control system, the recommended route.

14. The agricultural vehicle of claim 13, further comprising:
an output user interface; and
wherein at least one non-transitory computer-readable storage medium of the guidance control system further comprises instructions that, when executed by the at least one processor, cause the guidance control system guidance control system to provide, on the output user interface, a visual representation of the recommended route.

15. An agricultural vehicle comprising a guidance control system configured to control one or more operations of the agricultural vehicle and comprising:
at least one processor; and
at least one non-transitory computer-readable storage medium storing instructions thereon that, when executed by the at least one processor, cause the guidance control system to:
obtain boundary information defining the predetermined region;
obtain geospatial information describing physical characteristics of the predetermined region;
identify and classify an obstacle in the predetermined region by processing the geospatial information;
generate a recommended route for movement of the agricultural vehicle within the predetermined region by processing at least the boundary information and the identified and classified obstacle; and
during a subsequent performance of the agricultural process by the agricultural vehicle within the region, control the travel direction of the agricultural vehicle to follow the recommended route for the agricultural vehicle.
